Europäisches Patentamt

European Patent Office

Office européen des brevets

(19)

(11) Veröffentlichungsnummer: **0 205 794**
**B1**

(12) **EUROPÄISCHE PATENTSCHRIFT**

(45) Veröffentlichungstag der Patentschrift: **29.08.90**

(51) Int. Cl.⁵: **G 01 S 13/86**

(21) Anmeldenummer: **86105027.6**

(22) Anmeldetag: **11.04.86**

(54) **Rundsuchsystem zur Raum-/Luftraumüberwachung.**

(30) Priorität: **23.05.85 CH 2194/85**

(43) Veröffentlichungstag der Anmeldung:
**30.12.86 Patentblatt 86/52**

(45) Bekanntmachung des Hinweises auf die
Patenterteilung:
**29.08.90 Patentblatt 90/35**

(84) Benannte Vertragsstaaten:
**CH DE FR GB IT LI NL SE**

(56) Entgegenhaltungen:
**EP-A-0 135 065**
**DE-A-3 113 472**
**US-A-3 108 270**
**US-A-3 501 762**
**US-A-3 644 043**
**US-A-4 050 068**

(73) Patentinhaber: **CONTRAVES AG**
**Schaffhauserstrasse 580**
**CH-8052 Zürich (CH)**

(72) Erfinder: **Frei, Ernst**
**Förlibuckweg 3**
**CH-8302 Kloten (CH)**
Erfinder: **Schläpfer, Hansjörg, Dr.**
**Lochwis 10**
**CH-8185 Winkel (CH)**

Courier Press, Leamington Spa, England.

EP 0 205 794 B1

## Beschreibung

Die Erfindung betrifft ein Verfahren zur Raum-/Luftraumüberwachung sowie eine Vorrichtung zur Durchführung des Verfahrens, unter Verwendung eines für die Szenenüberdeckung in Azimut und in Elevation im Infrarotbereich passiv arbeitenden Rundsuch-Ortungsgerätes und eines für die Zielerkennung und Distanzvermessung aktiv arbeitenden Radarsuch-und/oder -folgegerätes.

Für die Ortung von Zielen im Raum eignen sich Infrarot-Rundsuch-Ortungsgeräte weil sie passiv arbeiten und eine sehr genaue Lagebestimmung ermöglichen. Eine direkte und genaue Distanzmessung und Zielerkennung hingegen ist damit nicht möglich. Den dafür geeigneten Radarsuch-und/oder -folgegeräten haftet der Nachteil an, aktiv zu sein, das heisst von Dritten detektierbare elektromagnetische Strahlung auszusenden.

So beschreibt die US-A-3 108 270 beispielsweise ein nicht ständig aktives, kombiniertes System, das ein Infrarot-Rundsuch-Ortungsgerät zur Ermittlung möglicher Ziele und einen Radar enthält, welcher nur kurzzeitig Impulse auf mögliche Ziele abgibt. Die Zielinformation wird dabei auf zwei Schirmen angezeigt. Vom IR-Gerät wiedergegebene unechte Ziele, wie z.B. die Sonne oder andere feststehende Wärmequellen, liefern kein Radarecho und sind vom Operator auf den Schirmen als solche zu erkennen, werden aber gleichwohl immer wieder angestrahlt, wodurch unnötig oft elektromagnetische Impulse ausgesendet werden. Weiter haftet einer solchen Anordnung oder Nachteil an, ständig eine grosse Zahl von Zielen im Auge haben zu müssen, ohne dass eine ihrer Bedeutung angemessene Diskriminierung möglich wäre. Um ein Ziel beurteilen zu können, müssen Grösse, Temperatur und Bewegung miteinander in Beziehung gesetzt werden.

Es ist die Aufgabe der Erfindung, die Verwendung der unterschiedlichen Eigenschaften der genannten Art von Rundsuchsystem-Geräten dahingehend zu verbessern, dass gegenüber den nach den bisherigen Verfahren arbeitenden Rundsuchsystemen eine optimale Ueberwachung möglich und eine Aufklärung (Ortung) und Bekämpfung des Rundsuchsystems weitestgehend verunmöglicht wird.

Die Aufgabe wird bezüglich des Verfahrens durch die im Patentanspruch 1 angegebenen Merkmale gelöst.

Die Vorrichtung zur Durchführung des Verfahrens ist in Anspruch 10 definiert.

Einzelheiten ergeben sich aus der folgenden Beschreibung in Verbindung mit der Zeichnung und den weiteren Patentansprüchen.

Die Zeichnung zeigt ein als Blockschaltbild dargestelltes Rundsuchsystem zur Luftraumüberwachung.

Ein in der Zeichnung als Blockschaltbild dargestelltes Rundsuchsystem umfasst für die Raumüberwachung, insbesondere für die Luftraumüberwachung, eine mit 40 bezeichnete IR-Rundsucheinheit sowie eine mit 50 bezeichnete Radarsuch- und/oder -folgeeinheit. Die IR-Rundsucheinheit 40 besteht im wesentlichen aus einem IR-Ortungsgerät 10 sowie einem IR-Signalprozessor 35, während die Radarsuch- und/oder -folgeeinheit 50 im wesentlichen einen Radarsender-/Empfängerteil 55 mit Antenne 56 einen Radardaten-Extraktor 60, eine Datenverarbeitungseinrichtung 65 sowie eine Radaraktivierungs-Steuereinheit 70 umfasst.

Das mit 10 bezeichnete und als Infrarot-Rundsuchsensor ausgebildete IR-Ortungsgerät weist einen in einem Gehäuse 15 in nicht näher dargestellter Weise schwenkbar gelagerten Spiegel 11, eine entsprechend zugeordnete IR-Optik 12, einen aus mehreren Detektorelementen mit linearem Aufbau gebildeten Detektor 14, ein zugeordnetes Kühlelement 13 sowie eine elektronische Daten-Aufbereitungseinrichtung 16 auf. Diese Daten-Aufbereitungseinrichtung 16 hat beispielsweise einen Vorverstärkerteil, einen Multiplexer sowie eine Analog-Digital-Wandlereinheit.

Der dem IR-Ortungsgerät 10 nachgeschaltete IR-Signalprozessor 35 enthält eine Vorfiltereinheit 20, einen Zielextrakter 25 sowie einen Infrarot/Radar-Zielkorrelator 30.

Die Wirkungsweise des aus der IR-Rundsucheinheit 40 und der Radarsuchund/oder Folgeeinheit 50 gebildeten Rundsuchsystems wird nachstehend beschrieben. Von dem mit nicht näher dargestellten Mitteln und vorzugsweise mit konstanter Rotationsgeschwindigkeit angetriebenen IR-Ortungsgerät 10 wird von der Szene emittierte Wärmestrahlung WS empfangen, wobei durch die Rotation des IR-Ortungsgeräts 10 eine Szenenüberdeckung im Azimut und durch die gleichzeitige Schwenkbewegung des Spiegels 11 im Gehäuse 15 eine Szenenüberdeckung in Elevation erreicht wird. Die hierbei empfangene und mit Pfeilrichtung WS bezeichnete Wärmestrahlung gelangt durch ein im Gehäuse 15 entsprechend vorgesehenes IR-durchlässiges Eintrittsfenster (nicht dargestellt) auf den Spiegel 11, wird von diesem reflektiert und mittels der IR-Optik 12 dem IR-strahlungsempfindlichen Detektor 14 zugeführt.

Die von dem Detector 14 gelieferten Videosignale werden durch die Daten-Auf-bereitungseinrichtung 16 in einem seriellen Datenstrom gewandelt und anschliessend zusammen mit-den aktuellen Azimut-Elevationsdaten des IR-Ortungsgerätes 10 dem im wesentlichen aus der Vorfiltereinheit 20, dem Zielextrakter 25 und dem Zielkorrelator 30 gebildeten IR-Signalprozessor 35 zugeführt.

In dem IR-Signalprozessor 35 werden aus der Gesamtmenge der im Suchvolumen anfallenden Daten die Ziele im Raum und/oder Luftraum gegenüber dem Hintergrund diskriminiert und mit den entsprechenden Elevations- und Azimutwerten im Zielkorrelator 30 festgehalten, wobei die IR-Zieldiskrimination aufgrund des relativ grossen Datenanfalls vorzugsweise in zwei Stufen erfolgt. Eine erste Filterung des relativ grossen Videosignal-Datenanfalls erfolgt in der ein- oder zweidimensionalen Vorfiltereinheit 20 beispielsweise mit einem Transversalfilter und adaptiv nachgeführter Schwellwertberechnung. Die Vorfiltereinheit 20 hat beispielsweise eine Hochpasscharakteristik, so dass tieffrequente Signalanteile von relativ grossen IR-emittierenden Flächen ausgeschieden werden. Die Datenreduktion erfolgt vorzugsweise mit einem in der Grössenordnung bei 1000 Meldungen liegenden Reduktionsfaktor, so dass die erforderliche Detektionswahrscheinlichkeit nicht oder nur unwesentlich beeinflusst wird.

Die an der Vorfiltereinheit 20 nachgeschalteten Zielextraktor 25 bei jedem Suchzyklus anfallenden Zielmeldungen, die etwa in der Grössenordnung bei 20k Zielmeldungen liegen, werden unter Verwendung verschiedener Algorithmen und Korrelationen auf ihre Nachbarschaft (Clusterbildung) untersucht und mit dem Inhalt eines Fest- oder Falschzielspeichers verglichen (räumliche Korrelation). Vorhandene IR-Ziele die keine Echtzielmerkmale haben oder dauernd in derselben Falschziel-Raumzelle vorhanden sind, werden mit Hilfe des Zielextraktors 25 eliminiert.

Die im Zielextraktor 25 gefilterten Echtziele mit den ermittelten Werten der Elevationswinkel λ und den Werten der Azimutwinkel α werden dem Zielkorrelator 30 zugeführt und gespeichert. Gleichzeitig werden die Azimutwinkel-Werte α und eventuell die Elevationswinkel-Werte λ der Radaraktivierung-Steuereinheit 70 der Radarsuch- und/oder Folgeeinheit 50 zugeführt.

Die von dem IR-Zielextraktor 25 bezeichneten und der Aktivierungseinheit 70 als Winkel-Daten zugeführten Zielmeldungen bewirken für eine Verifikation eine kurzzeitige (Millisekunden) Emission von den mit R bezeichneten elektromagnetischen Radarpulsen in Winkelrichtung der entsprechenden Zielmeldung. Sofern die Radarsuch- und/oder Folgeeinheit 50 an der bereits von dem IR-Ortungsgerät 10 ermittelten und dem Suchradar übertragenen Position ein Ziel erkennt, werden entsprechende Zielmeldungen vom Radardaten-Extraktor 60 und von dort der Datenverarbeitungseinrichtung 65 übertragen. Von der Datenverarbeitungseinrichtung 65 werden entsprechend nach Azimutwinkel α sowie Distanz D und evtl. auch Elevationswinkel λ gegliederte Zieldaten dem Zielkorrelator 30 zugeführt und mit den gespeicherten IR-Zielmeldungen verglichen.

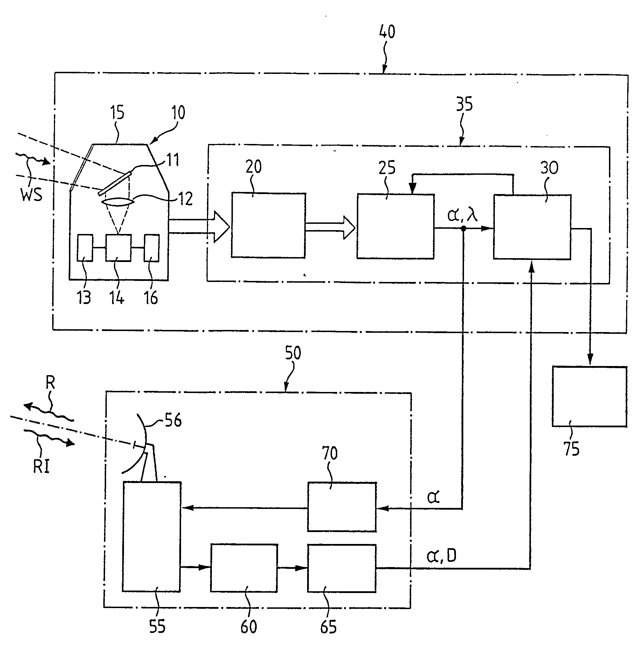

Beim Vorliegen eines von dem Radargerät verifizierten Zieles werden entsprechende Zielmeldungen mit den drei wesentlichen Zielkoordinaten — Elevation, Azimut und Distanz — an ein übergeordnetes System, vorzugsweise an eine in Fig. 1 schematisch dargestellte Feuerleit-Einrichtung 75 geleitet. Ist hingegen kein korrelierbares Radarziel vorhanden, oder sofern eine geländeabhängige Falschmeldung eines IR-Zieles vorliegt, wird mittels einer geeigneten Rückmeldung an den IR-Zielextraktor 25 die entsprechende Raumzelle des Festziel- oder Falschzielspeichers aktiviert, wodurch weitere Zielmeldungen desselben IR-Falschzieles, sowie eine nochmalige Emission des Suchradars in die Richtung derartiger Zielobjekte verhindert werden.

Bei der vorstehend beschriebenen Wirkungsweise des Rundsuchsystem bleibt das Radar weitgehend passiv und wird ausschliesslich nur dann kurzzeitig aktiviert, wenn die IR-Rundsucheinheit 40 ein potentielles Ziel erkannt hat. Von dem Suchradar werden vorzugsweise neben der Distanz-Information, dem Azimut- und evtl. Elevationswinkel noch weitere, wesentliche Informationen ermittelt, zum Beispiel solche Informationen, ob das Ziel sich bewegt, ein schwebender Helikopter oder ein Festziel ist, und gegebenenfalls welche Geschwindigkeit das sich bewegende Ziel hat.

Aufgrund der erhaltenen Verifikations-Informationen durch das Radargerät können IR-Ziele die keine Echtziele darstellen eliminiert werden, woraus eine relativ geringe Falschalarm-Wahrscheinlichkeit resultiert.

Bei der vorstehend beschriebenen Wirkungsweise des gesamten Rundsuchsystems rotiert die Radarsuch- und/oder Folgeeinheit 50 in Azimut vorzugsweise langsamer als das IR-Ortungsgerät 10, welches ebenfalls in Azimut rotiert und mit dem integrierten, in Elevation schwenkbaren Spiegels 11 zur Ueberstreichung des gesamten Raumes im wesentlichen eine helikoidale Suchbewegung durchführt.

**Patentansprüche**

1. Verfahren zur Ueberwachung eines Raums, insbesondere eines Luftraums, bei dem

der Raum mittels eines im Infrarotbereich passiv arbeitenden Rundsuch-Ortungsgeräts in der Azimutrichtung und der Elevationsrichtung zyklisch abgetastet wird, wobei der jeweiligen Azimut- und Elevationsrichtung entsprechende Positionssignale erzeugt und aus den empfangenen Infrarotsignalen Zielsignale abgeleitet werden,

mittels eines als Such- und/oder Zielverfolgungsgerät ausgebildeten und jeweils durch Steuersignale nur zu ausgewählten Zeitpunkten aktivierten Radargeräts eine aktive Zielerkennung und Distanzmessung jeweils für solche Azimut- und Elevationsrichtungen durchgeführt wird, für die Zielsignale des Rundsuch-Ortungsgeräts vorliegen,

dadurch gekennzeichnet, dass

die empfangenen Infrarotsignale zwecks Elimination von Hintergrundsignalen gefiltert werden, die sich nach der Filterung ergebenden potentiellen Zielsignale einer der Unterdrückung von Falschzielen dienenden Extraktionsbehandlung unterworfen und die aus dieser Behandlung resultierenden Zielsignale mit Echtzielmerkmalen zusammen mit den jeweils zugeordneten Positionssignalen gespeichert werden,

die Steuersignale zur Aktivierung des Radargeräts in den genannten Azimut- und Elevationsrichtungen aus den den gespeicherten Zielsignalen zugeordneten Positionssignalen gewonnen werden,

die vom Radargerät erzeugte Zielinformation zur Verifizierung der gespeicherten Zielsignale verwendet wird und

die Kriterien für die Zielsignal-Extraktion anhand der verifizierten Zielsignale korrigiert werden.

2. Verfahren nach Anspruch 1, dadurch gekennzeichnet, dass die im gesamten Suchvolumen anfallenden und als Videosignal aufbereiteten Zielsignale zwecks Abtrennung der zur weiteren Verarbeitung nicht relevanten Signalmenge hochpassartig vorgefiltert werden.

3. Verfahren nach Anspruch 2, dadurch gekennzeichnet, dass die Vorfilterung zur Abtrennung der nicht relevanten Signalmenge eine adaptiv nachgeführte Schwellwertberechnung umfasst.

4. Verfahren nach Anspruch 1 bis 3, dadurch gekennzeichnet, dass die Zielsignale auf Clusterbildung untersucht und mit dem Inhalt eines Fest- oder Falschzielspeichers verglichen werden.

5. Verfahren nach Anspruch 4, dadurch gekennzeichnet, dass Zielsignale, die keine Echtzielmerkmale haben, bei der Extraktionsbehandlung eliminiert oder maskiert werden.

6. Verfahren nach Anspruch 1 bis 5, dadurch gekennzeichnet, dass ausschliesslich die Zielsignale mit Echtzielmerkmalen durch die vom Radar gelieferte Zielinformation verifiziert werden.

7. Verfahren nach Anspruch 1 bis 6, dadurch gekennzeichnet, dass das Radargerät auch zur Erkennung von Festzielen oder sich bewegenden Zielen mit Geschwindigkeitsangaben verwendet wird.

8. Verfahrenn nach Anspruch 1 bis 7, dadurch gekennzeichnet, dass die Echtzielsignale mit Hilfe der vom Radargerät gelieferten Zielinformation überprüft und ergänzt werden.

9. Verfahren nach einem der vorstehenden Ansprüche, dadurch gekennzeichnet, dass die verifizierten Echtzielsignale, die zugeordneten Positionssignale und die Zielinformation einer Feuerleiteinrichtung (75) zugeführt werden.

10. Vorrichtung zur Durchführung des Verfahrens nach einem der vorhergehenden Ansprüche mit

einem für die Zielsuche und/oder Zielverfolgung in der Azimut- und der Elevationsrichtung ausgebildeten Radargerät (50), welches eine Auswerteschaltung (60, 65) zur Ermittlung der Distanz eines erfassten Ziels umfasst,

einem im Infrarotbereich arbeitenden, eine zyklische passive Abtastung des zu überwachenden Raums in der Azimut- und der Elevationsrichtung ausführenden Rundsuch-Ortungsgerät (40) mit einer Signalverarbeitungsschaltung (35) zur Erzeugung von Zielsignalen anhand der empfangenen Infrotsignale und mit Winkelgebern zur Erzeugung von die Azimut- und Elevationsrichtung des Rundsuch-Ortungsgeräts charakterisierenden Positionssignalen,

Steuereinrichtungen (70) zur kurzzeitigen Aktivierung des Radargeräts in ausgewählten Azimut- und Elevationsrichtungen, für die das Rundsuch-Ortungsgerät ein Zielsignal erzeugt hat,

dadurch gekennzeichnet, dass

das Rundsuch-Ortungsgerät (40) Einrichtungen zur Analog-Digital-Wandlung der empfangenden Infrarotsignale enthält,

die Signalverarbeitungsschaltung (35) als digitaler Signalprozessor ausgebildet ist und einen Filter- und Extraktorteil (20, 25) zur Diskriminierung der potentiellen Zielsignale gegen Hintergrundsignale und Falschziele sowie einen Zielkorrelator (30) aufweist, dem die diskriminierten potentiellen Zielsignale zusammen mit den zugehörigen Positionssignalen zugeführt sind und welcher Mittel zur Speicherung der Ziel- und Positionssignale aufweist,

den Steuereinrichtungen (70) die den diskriminierten Zielsignalen zugeordneten Positionssignale zugeführt sind, wobei diese Einrichtungen Mittel zur Aktivierung des Radargeräts in den von den zugeführten Positionssignalen bezeichneten Richtungen aufweisen,

der Zielkorrelator (30) Mittel zur Verifizierung der ihm zugeführten Zielsignale anhand der ihm ebenfalls zugeführten Radarzieldaten sowie zur Rückmeldung erkannter Falschziele an den Filter- und Extraktorteil (20, 25) aufweist.

11. Vorrichtung gemäss Anspruch 10, dadurch gekennzeichnet, dass der Filter- und Extraktorteil (20, 25) aus einem Vorfilter (20) mit Hochpasscharakteristik und adaptiv nachgeführter Schwelle und einem Zielextraktor (25) besteht, der die anfallenden Zielsignale korreliert und Ziele ohne Echtzielmerkmale sowie zurückgemeldete Falschziele eliminiert oder maskiert.

**Revendications**

1. Procédé pour la surveillance de l'espace, notamment de l'espace aérien, procédé dans lequel:

l'espace est exploré cycliquement en azimut et en élévation au moyen d'un appareil de localisation panoramique fonctionnant de façon passive dans le domaine infrarouge, des signaux correspondants de positions en azimut et en élévation, étant alors produits et des signaux de buts étant dérivés à partir des signaux infrarouges reçus,

au moyen d'un appareil radar revêtant la forme d'un appareil de recherche et/ou de poursuite de buts, et qui est activé par des signaux de commande uniquement à des instants sélectionnés, une reconnaissance active de but et une mesure de la distance sont respectivement effectuées pour les directions en azimut et en élévation pour lesquelles il existe des signaux de l'appareil de localisation panoramique, procédé caractérisé en ce que:

les signaux infrarouges reçus sont filtrés dans le but d'éliminer les signaux d'arrière plan,

les signaux de buts potentiels obtenus après la filtration, sont soumis à un traitement d'extraction servant à supprimer les buts artificiels, et les signaux de buts résultant de ce traitement et comportant les caractéristiques d'un but véritable, sont mémorisés conjointement avec les signaux de position qui leur sont respectivement associés,

les signaux de commande permettant d'activer l'appareil radar dans les directions en azimut et en élévation précitées, sont obtenus à partir des signaux de position associés aux signaux de buts mémorisés,

l'information de but obtenue à partir de l'appareil radar est utilisée pour vérifier les signaux de buts mémorisés,

les critères pour l'extraction des signaux de buts sont corrigés à l'aide des signaux de buts vérifiés.

2. Procédé selon la revendication 1, caractérisé en ce que les signaux de buts obtenus dans la totalité du volume de recherche et mis sous forme de signaux vidéo, sont préfiltrés sur des filtres passehaut pour les séparer de la quantité de signaux n'ayant pas d'importance pour le traitement ultérieur.

3. Procédé selon la revendication 2, caractérisé en ce que la préfiltration pour la séparation de la quantité de signaux sans importance, comprend un calcul de valeur de seuil conduit de façon adaptative.

4. Procédé selon l'une des revendications 1 à 3, caractérisé en ce que les signaux de buts sont examinés en ce qui concerne la formation d'agglomérats et sont comparés avec le contenu d'une mémoire de buts véritables ou de buts artificiels.

5. Procédé selon la revendication 4, caractérisé en ce que les signaux de buts qui n'ont pas les caractéristiques d'un but véritable, sont éliminés ou bien masqués lors du traitement d'extraction.

6. Procédé selon l'une des revendications 1 à 5, caractérisé en ce que, de façon exclusive, seuls les signaux de buts ayant des caractéristiques de buts véritables sont vérifiés par l'information de but délivrée par le radar.

7. Procédé selon l'une des revendications 1 à 6, caractérisé en ce que l'appareil radar est également utilisé pour reconnaître les buts fixes ou bien les buts en déplacement grâce à des indications de vitesse.

8. Procédé selon l'une des revendications 1 à 7, caractérisé en ce que les signaux de buts véritables sont vérifiés et complétés à l'aide de l'information de buts délivrée par l'appareil radar.

9. Procédé selon une des précédentes revendications, caractérisé en ce que les signaux de buts véritables ainsi vérifiés, les signaux de position qui leur sont associés, et l'information de but, sont appliqués à une installation de conduite de tir (75).

10. Dispositif pour la mise en oeuvre du procédé selon l'une des revendications précédentes, ce dispositif comportant:

un appareil radar (50) prévu pour la recherche des buts et/ou la poursuite des buts en azimut et en élévation, cet appareil comprenant un circuit d'exploitation (60, 65) pour déterminer la distance d'un but détecté,

une unité de recherche panoramique (40) fonctionnant dans le domaine infrarouge et effectuant une exploration cyclique passive en azimut et en élévation de l'espace à surveiller, avec un circuit (35) de traitement de signaux pour obtenir des signaux de buts à l'aide des signaux infrarouges reçus et avec des indicateurs d'angle pour obtenir les signaux de position caractérisant la direction en azimut et en élévation de l'appareil de localisation omnidirectionnel.

des moyens de commande (70) pour activer pendant une courte période l'appareil radar dans des directions sélectionnées en azimut et en élévation, pour lesquelles l'appareil de localisation omnidirectionnel a obtenu un signal de but,

dispositif caractérisé en ce que:

l'appareil de localisation omnidirectionnel (40) comprend des moyens pour la conversion analogique-numérique des signaux infrarouges reçus,

le circuit (35) de traitement de signaux revêt la forme d'un processeur numérique de signaux et comporte une partie de filtration et d'extraction (20, 25) pour discriminer les signaux de buts potentiels des signaux d'arrière plan et de buts artificiels, ce circuit (35) comportant également un corrélateur de but (30), auquel sont amenés, conjointement avec les signaux de position qui leur sont associés, les signaux de buts potentiels ainsi discriminés, ce corrélateur de but comportant des moyens pour la mémorisation des signaux de buts et de positions.

les moyens de commande (70), auxquels sont appliqués les signaux de positions associés aux signaux de buts ainsi discriminés, comportent des moyens pour activer l'appareil radar dans les directions désignées par les signaux de positions ainsi appliqués,

le corrélateur de but (30) comporte des moyens pour vérifier les signaux de but qui lui sont appliqués à l'aide de données de buts obtenues par radar et qui lui sont également appliquées, ainsi que des moyens pour annoncer en retour à la partie de filtration et à la partie d'extraction (20, 25) les buts artificiels qui ont été reconnus.

11. Dispositif selon la revendication 10, caractérisé en ce que la partie de filtration et la partie d'extraction (20, 25) sont constituées par un préfiltre (20) avec des caractéristiques de filtre passehaut et un seuil suivi de façon adaptative, et par un extracteur de buts (25) qui corrèle les signaux de buts se présentant et qui élimine ou masque les buts n'ayant pas de caractéristiques de buts véritables ainsi que les buts artificiels annoncés en retour.

## Claims

1. Method for monitoring an area, more particularly an air space, wherein

the space is cyclically scanned in the azimuth direction and the elevation direction by means of an all-around search-location device operating passively in the infrared range, position signals corresponding to the particular azimuth and elevation direction being generated and target signals being derived from the infrared signals received,

by means of a radar device designed as a search and/or target tracking device and activated in each case by control signals only at selected moments in time, active detection of the target and measurement of the distance is carried out in each of those azimuth and elevation directions for which target signals of the all-around search-location device are available,

characterised in that

the received infrared signals are filtered to eliminate background signals,

the potential target signals produced after filtering are subjected to an extraction process which serves to suppress false targets, and the target signals which result from this processing and which have genuine target features are stored together with the respective position signals associated with them,

the control signals for activating the radar device in the stated azimuth and elevation directions are obtained from the position signals associated with the stored target signals,

the target information generated by the radar device is used to verify the stored target signals, and

the criteria for the extraction of target signals are corrected on the basis of the verified target signals.

2. Method according to claim 1, characterised in that the target signals accumulating in the total area covered by the search and prepared in the form of a video signal are prefiltered in the manner of a high pass to exclude all the signals which are irrelevant to the further processing procedure.

3. Method according to claim 2, characterised in that the prefiltering to exclude all the irrelevant signals comprises adaptively following threshold value calculation.

4. Method according to claim 1 to 3, characterised in that the target signals are checked for cluster formation and are compared with the content of a definite or false target memory.

5. Method according to claim 4, characterised in that target signals which have no genuine target features are eliminated or masked in the extraction procedure.

6. Method according to claim 1 to 5, characterised in that only the target signals which have genuine target features are verified by the target information supplied by the radar.

7. Method according to claim 1 to 6, characterised in that the radar device is also used to recognize fixed targets or moving targets with speed data.

8. Method according to claim 1 to 7, characterised in that the genuine target signals are checked and supplemented by means of the target information supplied by the radar device.

9. Method according to one of the preceding claims, characterised in that the verified genuine target signals, the associated position signals and the target information are supplied to a fire control device (75).

10. Apparatus for implementing the method according to one of the preceding claims, comprising

a radar device (50) designed for target searching and/or target tracking in the azimuth and elevation direction and incorporating an evaluation circuit (60, 65) for determining the distance of a detected target,

an all-around search-location device (40) operating in the infrared range and effecting cyclical passive scanning of the area for monitoring in the azimuth and the elevation direction, comprising a signal processing circuit (35) to generate target signals on the basis of the infrared signals received and angle generators to generate position signals characterising the azimuth and elevation direction of the all-around search-location device,

control devices (70) for briefly activating the radar device in selected azimuth and elevation directions for which the all-around search-location device has generated a target signal,

characterised in that

the all-around search-location device (40) comprises facilities for the analog-digital conversion of the infrared signals received,

the signal processing circuit (35) is designed as a digital signal processor and has a filter and extractor part (20, 25) for discriminating potential target signals from background signals and false targets, and a target correlator (30) to which the discriminated potential target signals are supplied together with the associated position signals and which has means for storing the target and position signals,

the position signals associated with the discriminated target signals are supplied to the control facilities (70), these facilities having means for activating the radar device in the directions indicated by the supplied position signals,

the target correlator (30) has means for verifying the target signals supplied to it on the basis of the radar target data also supplied to it and for acknowledging to the filter and extractor part (20, 25) false targets which have been detected.

11. Apparatus according to claim 10, characterised in that the filter and extractor part (20, 25) consists of a preliminary filter (20) with high pass characteristic and adaptively following threshold, and a target extractor (25) which correlates the accumulating target signals and eliminates or masks those targets which do not have genuine target features and the acknowledged false targets.